# EUROPÄISCHE PATENTSCHRIFT

(11) **EP 0 576 876 B1**
(45) Veröffentlichungstag und Bekanntmachung des Hinweises auf die Patenterteilung: **20.08.1997**
(21) Anmeldenummer: 93109164.9
(22) Anmeldetag: 08.06.1993
(51) Int. Cl.: G02F 1/13, H01R 23/72

(54) **Display**
Display
Afficheur

(30) Priorität: 27.06.1992 DE 9208632 U
(43) Veröffentlichungstag der Anmeldung: 05.01.1994
(73) Patentinhaber: Valeo Borg Instruments Verwaltung GmbH, 75196 Remchingen (DE)
(72) Erfinder: Barth, Manfred, D-7547 Wildbad 5 (DE); Ziegler, Wolfgang, Dr., D-7516 Karlsbad 2 (DE)
(74) Vertreter: COHAUSZ HASE DAWIDOWICZ & PARTNER

(56) Entgegenhaltungen:
- EP-A- 0 121 149
- DE-A- 3 023 614
- DE-A- 3 530 827
- DE-A- 3 743 841
- US-A- 5 029 984

## Beschreibung

Die Erfindung betrifft ein Display gemäß dem Oberbegriff des Anspruches 1.

Ein derartiges Display ist aus der DE-PS 35 30 827 bekannt. Wie bei elektro-optischen Flüssigkristall-Anzeigen üblich, überragt dort die Frontscheibe längs wenigstens eines Randes die Rückscheibe, zwischen denen die Flüssigkristallschicht eingeschlossen ist. Die wird elektrisch über Speiseelektroden angesteuert, welche dafür in Betrachtungsrichtung hinter dem überstehenden Rand der Frontscheibe zugänglich sind. Dem elektrischen Anschluß der Elektroden an eine Leiterplatte dient ein sogenannter Zebra-Leitgummistreifen, der rückwärtig gegen das Elektrodenmuster auf dem überstehenden Rand der Frontscheibe angedrückt ist. Konstruktiv bedingt das ein Widerlager auf dem sichtseitigen Frontscheiben-Rande. Das Widerlager muß mit der Aufnahmekonstruktion für die Leiterplatte hinter dem Display konstruktiv verbunden sein, um das funktionsfertig erstellte und geprüfte Display für den Einbau handhaben zu können. Daraus resultiert jedoch, daß die wirksame Einbauebene um die Stärke des Widerlagers vor der sichtseitigen Frontfläche der Frontscheibe liegt. Das ist in der Praxis häufig unerwünscht, weil daraus ästhetisch unvorteilhafte Einbaugegebenheiten bzw. die optische Informationsaufnahme störende Paralaxegegebenheiten resultieren.

Zwar könnte man daran denken, das Display insofern umgekehrt zur üblichen Ausbildung aufzubauen, daß gemäß der EP 0 121 149 A1 die Frontscheibe kleiner als die Rückscheibe des Display gewählt wird. Dann können die Speiseelektroden auf dem Seitenrand der nun größeren Rückscheibe von einer L-förmig übergreifenden Klammer an der quer zum Display nach hinten sich erstehenden Leiterplatte kontaktiert werden, mit Ausbildung der Widerlager-Funktion an einem abgewinkelten Endstück der Leiterplatte selbst. Eine solche Konstruktion mit direkt hinter dem Display endender Leiterplatte, die auch noch Stützfunktionen übernehmen muß, ist aber für die konstruktiven Belange der Praxis, im Sinne einer Display-Anpassung an unterschiedliche Einbaugegebenheiten, zu wenig flexibel, und insbesondere für Kraftfahrzeug-Anwendungen ist diese L-förmige Übereck-Kontaktierung nicht hinreichend erschütterungssicher.

Die deutsche Offenlegungsschrift 30 23 614 betrifft eine Steckerleiste für Flüssigkristallanzeigen, welche einen Kunststoff-Grundkörper als Träger von Kontaktfedern aufweist, mit denen die Steckerleiste auf die Kante der Längsseiten einer mit leiffähigen Bahnen versehenen Grundplatte der Flüssigkristallanzeige aufsteckbar ist, wobei die Kontaktfedern der Steckerleiste aus die Grundplatte der Flüssigkristallanzeige beidseitig metallisch umklammernden Gabelfedem bestehen, die in Federkammern des Kunststoff-Grundkörpers verankert sind. Insbesondere wird dort die Verwendung von u-förmigen Gabelkontakten offenbart, die längs des Seitenrandes einer Grundplatte einer Flüssigkristallanzeige die dort angebrachten Speiseelektroden erfaßt, wobei sich das Joch der u-förmigen Klammern jeweils quer zum Display in einem Kontaktstift fortsetzt. In dieser Offenlegungsschrift ist aber weder offenbart, noch nahegelegt, im Rahmen des erfindungsgemäß eingesetzten Displays an der Sichtseite des Displaygehäuses befestigte L-förmige und federelastisch ausschwenkbare Klauen bereit zu stellen, die mit ihren kurzen Schenkeln die größere Rückscheibe neben der kleineren Frontscheibe hinter deren sichtseitiger Ebene seitlich umgreifen.

Aus dem US-Patent 5 029 984 ist ein elektro-optisches Display nach dem Oberbegriff von Anspruch 1 bekannt. Dort ist allerdings weder offenbart noch nahegelegt, einerseits eine spezifische Art der Kontaktierung der Speiseelektroden mit der seitlich angebrachten Leiterplatte vorzusehen. Darüber hinaus ist diesem Dokument auch kein Hinweis entnehmbar, daß an der Sichtseite des Displaygehäuses befestigte L-förmige und federelastisch ausschwenkbare Klauen vorgesehen sind, die mit ihrem kurzen Schenkel die größere Rückscheibe neben der kleineren Frontscheibe hinter deren sichtseitiger Ebene seitlich umgreifen.

In Erkenntnis dieser Gegebenheiten liegt der Erfindung die Aufgabe zugrunde, ein Display gattungsgemäßer Art derart auszugestalten, daß sich bei beschleunigungssicherer Kontaktierung zwischen den Display-Speiseelektroden und der Leiterplatte der Ansteuerschaltung eine ungestörter Einbauebene in der Sichtfläche der Display-Frontscheibe selbst realisieren läßt.

Diese Aufgabe ist erfindungsgemäß im wesentlichen dadurch gelöst, daß das gattungsgemäße Display gemäß dem Kennzeichnungsteil des Anspruches 1 ausgelegt ist.

Nach dieser Lösung erfolgt die Kontaktierung weiterhin mittels des auch gerade in der Kraftfahrzeugtechnik bewährten Zebra-Leitgummistreifens. Der wird nun aber nicht mehr - abgestützt gegen ein Widerlager vor der sichtseitigen Display-Frontebene - von rückwärts längs eines Randbereiches gegen die vordere Displayscheibe angedrückt, sondern er ist zusammen mit der quer zum Display sich erstreckenden Leiterplatte hinter das Display verlegt. Die sichtseitige Frontebene ist durch die kleinere zweier Display-Scheiben gegeben, hinter der sich die seitlich überstehende größere Scheibe erstreckt, längs deren Seitenrand die Display-Speiseelektroden stumpf enden. Letztere werden von entsprechend nebeneinander längs des Seitenrandes auf die Rückscheibe aufgeklemmten Kontakt-Klammern erfaßt, wie sie etwa aus dem DE-GM 87 15 696 als solche bekannt sind; wobei das Klammer-Joch sich nun nach Art eines Führungs-Stiftes weit nach hinten hinter das Display unter den Leitgummistreifen erstreckt.

Dadurch ist zwischen der Display-Frontebene und der größeren rückwärtigen Scheibe ein hinreichender Freiraum nicht nur für das Aufsetzen der Kontaktklammern auf den Scheiben-Seitenrand geschaffen, sondern auch für dessen Umgreifen mittels der kurzen Schenkel von Halteklauen, die das Display mit auf die Rückscheibe aufgesetzen Kontaktklammern am Gehäuse und damit relativ zum Leitgummistreifen wie auch zur Leiterplatte positionieren. Letztere ist ohne weiteres für Prüf- und Reparaturzwecke austauschbar, da sie keine eigene Halterungsfunktion für das Display oder seinen Leitgummistreifen ausübt.

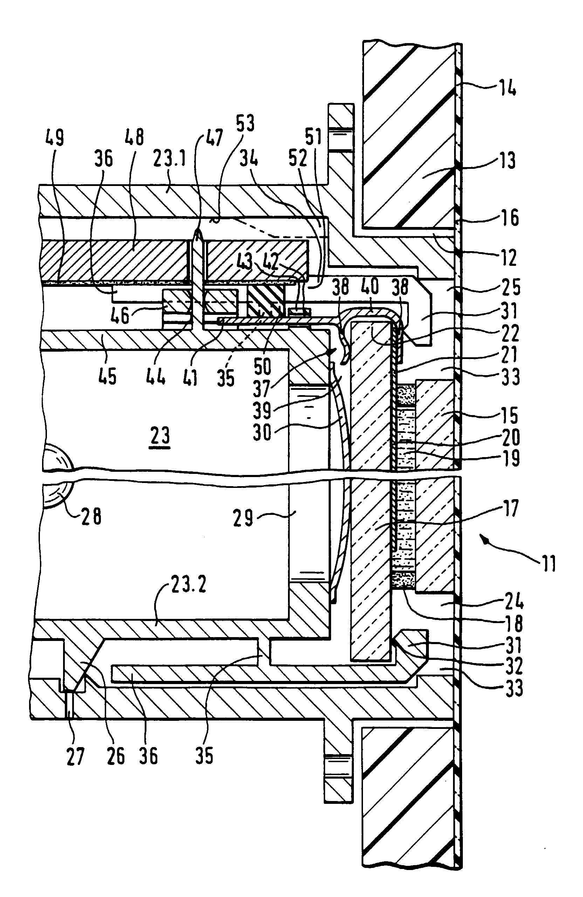

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche abstrahiert aber angenähert maßstabsgerecht stark vergrößert skizzierten bevorzugten Realisierungsbeispiels zur erfindungsgemäßen Lösung. Die einzige Figur der Zeichnung zeigt im Querschnitt den Aufbau und Einbau eines Display mit ebener, mit der Einbau-Umgebung fluchtender, Frontfläche.

Das dargestellte Display 11 ragt von rückwärts in eine Aufnahmeöffnung 12 einer Armaturentafel 13 hinein, die sichtseitig mittels einer durchgehenden Folie 14 kaschiert ist. Das Display 11 ist als Flüssigkristall-Display aufgebaut und konstruktiv so ausgelegt, daß seine Frontscheibe 15 sichtseitig in der Ebene 16 der umgebenden Armaturentafel 13 liegt. Dafür ist die Display-Frontscheibe 15 kleiner bemessen als die sie seitlich überragende Rückscheibe 17. Die dazwischen und innerhalb einer umlaufenden Distanz- und Randversiegelung 18 eingeschlossene Kammer 19 ist in als solcher bekannter Weise mit flüssigkristallinem Material gefüllt, dessen Orientierung zur visuellen Informationsdarstellung bereichsweise durch ein elektrisches Feld einstellbar ist. Die dafür erforderlichen Elektrodensegmente 20 sind nun auf der sichtseitigen Oberfläche der Rückscheibe 17 aufgebracht und an Speiseelektroden 21 angeschlossen, die an einem Seitenrand 22 der die Frontscheibe 15 seitlich überragenden Rückscheibe 17 nebeneinander enden.

Ein mehrteiliges Display-Gehäuse 23 besteht im wesentlichen aus einem rechteckig-topfförmigen Einbau-Gehäuse 23.1 mit einer Sichtöffnung 24 in seinem Boden 25, in das von rückwärts ein im wesentlichen als Hohlquader ausgebildetes Lampengehäuse 23.2 so eingesetzt ist, daß der Boden 25 des Einbaugehäuses 23.1 sichtseitig nicht über die Einbau-Ebene 16 der Display-Frontscheibe 15 vorsteht. Die entsprechende gegenseitige Positionierung der Gehäuseteile 23.1/23.2 erfolgt mittels einer an die parallel zueinander orientierten Kunststoffwände angeformten elastischen Verrastung 26, die durch eine Einstichöffnung 27 hindurch erforderlichenfalls zur Demontage wieder außer Eingriff gebracht werden kann.

Vor der, einer rückwärtig in das Lampengehäuse 23.2 hineinragenden Lichtquelle 28 gegenübergelegenen, Beleuchtungsöffnung 29 liegt die Rückscheibe 17 des Display 11 elastisch abgestützt gegen außerhalb der Beleuchtungsöffnung 29 (und außerhalb der in der Zeichnung gegebenen Schnittebene) an das Lampengehäuse 23.2 bogenförmig angespritzte Federn 30 an. Der Federdruck wirkt über die Display-Rückscheibe 17 gegen L-förmige Klauen 31, die mit ihren kurzen Schenkeln 32 Seitenränder 22 der Rückscheibe 17 im Freiraum 33 neben der kleineren Frontscheibe 15 hinter der Sicht-Ebene 16 seitlich überragen. Dargestellt ist in der Zeichnung eine solche Klaue 31 in der Schnitebene im Mittenbereich des Display 11 sowie am gegenüberliegenden Rückscheibenrand 22 eine von zwei weiteren Klauen 31 vor und hinter der Schnitt-Zeichenebene. Die langen Klauen-Schenkel 34 sind als zweiarmige Hebel über einen Biegesteg 35 an die benachbarten Seitenwände des Lampengehäuses 23.2 angespritzt, so daß die jeweilige Klaue 31 mit ihrem die Display-Rückscheibe 17 seitlich übergreifenden kurzen Schenkel 32 von dieser seitlich abgehoben werden kann, indem das frei Ende 36 der Abheberichtung entgegen zum Lampengehäuse 23.2 hingedrückt wird.

Der Seitenrand 22, der Display-Rückscheibe 17, an dem die Speiseelektroden 21 enden, ist bei diesen von U-förmigen Kontaktklammern 37 umgriffen. Deren Federschenkel 38 liegen vor der Rückscheibe 17 im Freiraum 33 zwischen den beiden randseitigen Klauen 31 und hinter der Rückscheibe 17 in einem Freiraum 39 zwischen den beiden endseitigen Federn 30. Das U-Joch 40 ist quer zum rückwärtigen Federschenkel 38, also nach hinten zu einem langen Stift 41 verlängert, der im Zuge der Montage beim Aufsetzen des Display 11 auf die Feder 30 (also bei abgehobenen Klauen-Schenkeln 32) eine örtlich zugeordnete Öffnung 42 in einer Rippe 43 parallel zur Achse des Lampengehäuses 23.2 durchgreift, die am sichtseitigen Ende des Lampengehäuses 23.2 außerhalb dessen parallel zur Erstreckung des Display 11 angeformt ist. Im Interesse einer verkantungsfreien Geradführung liegen die Stifte 41 in halbschalenförmigen Wölbungen 44, die sich hinter der Rippe 43 an der Außenwand 45 des Lampengehäuses 23.2 anschließen. Gegenüberliegend sind die Stifte 41 von entsprechenden komplementären Wölbungen 44 umgeben (insgesamt also durch zwei Hälften von Hohlzylindern eingefaßt), die an einem parallel zur Rippe 43 sich erstreckenden Stützstreifen 46 ausgebildet sind, der an der Lampengehäuse-Außenwand 45 von quer hochstehenden Positionierzapfen 47 gehaltert ist. Ebenfalls auf diese aufgesteckt ist eine die Display-Steuerschaltung tragende Leiterplatte 48, die sich somit zwischen Lampengehäuse 23.2 und Einbaugehäuse 23.1 seitlich gegen das Display 11 versetzt quer zu diesem nach hinten erstreckt.

Die Kontaktierung zwischen der Leiterbahnen-Kaschierung 49 und den Display-Speiseelektroden 21 über die Stifte 41 der Kontaktklemmen 37 erfolgt mittels eines leitfähigekeits-strukturierten Streifens aus Leitgummi 50 (einem sogenannten Zebra-Verbinder), der in dem Raum zwischen der Rippe 43, den hiergegen offenliegenden Stiften 41, dem Stützstreifen 46 und der kaschierten Oberfläche der Leiterplatte 48 eingelegt ist und sich in den Freiraum 51 zwischen freiem Stirnende der Rippe 43 und Leiterplatte 48 auswölben kann, wenn letztere geführt von den Zapfen 47 auf den Stützstreifen 46 gedrückt wird. Diesem vom Leitgummi 50 elastisch abgestützten Andruck können keilförmige Rippen 52 beim Einsetzen des bestückten Lampengehäuses 23.2 dienen, die an der benachbarten Seitenwand 53 des Einbaugehäuses 23.1 innen angeformt sind.

So ist eine sichere Leitgummi-Kontaktierung zwischen der Leiterplatte 48 und den Display-Speiselektroden 21 über die Kontaktklammern 37 sichergestellt, ohne daß das Leitgummi unmittelbar vor oder hinter der größeren Display-Scheibe längs deren Rand anliegt und sichtseitig einer Abstützung bedürfte, die einen flachen Aufbau mit ebener Einbaufrontebene 16 unmöglich machen würde.

## Patentansprüche

1. Elektro-optisches Display (11) mit zwei parallel zueinander angeordneten Scheiben (15, 17), von denen eine die andere seitlich überragt und Speiseelektroden (21) trägt, welche über ein segmentiertes Leitgummi (50) an die Leiterbahnen-Kaschierung (49) einer Leiterplatte (48) kontaktiert sind, die hinter den Scheiben (15, 17) quer zu diesen angeordnet ist,
dadurch gekennzeichnet,
daß eine kleinere Frontscheibe (15) vor einer größeren Rückscheibe (17) angeordnet ist, längs deren Seitenrand (22) die Speiseelektroden (21) von U-förmigen Kontaktklammern (37) erfaßt sind, deren Joch (40) sich jeweils quer zum Display (11) nach hinten in einen Stift (41) verlängert, mit Anordnung des Leitgummis (50) zwischen der Leiterplatte (48) und den Klammer-Stiften (41) im Bereiche einer Seitenwand des Display-Gehäuses (23),
wobei am Display-Gehäuse (23) L-förmige und federelastisch ausschwenkbare Klauen (31) befestigt sind, die mit ihren kurzen Schenkeln (32) die größere Rückscheibe (17) neben der kleineren Frontscheibe (15) hinter deren sichtseitiger Ebene (16) seitlich umgreifen.

2. Display nach Anspruch 1,
dadurch gekennzeichnet,
daß am Display-Gehäuse (23) eine Rippe (43) mit Öffnungen (42) zum Durchgriff der Klammer-Stifte (41) ausgebildet ist.

3. Display nach einem der vorangehenden Ansprüche,
dadurch gekennzeichnet,
daß am Display-Gehäuse (23) hinter dem Display (11), parallel zu diesem sich erstreckend, Positionierzapfen (47) zur Aufnahme eines Leitgummi-Stützstreifens (46) und der Leiterplatte (48) ausgebildet sind.

4. Display nach einem der vorangehenden Ansprüche,
dadurch gekennzeichnet,
daß am Display-Gehäuse (23) seitlich hinter der Rückscheibe (17) gebogene Stütz-Federn (30) zum Andruck der Rückscheibe (17) gegen den kurzen Schenkel (32) der Display-Halteklauen (31) vorgesehen sind.

5. Display nach einem der vorangehenden Ansprüche,
dadurch gekennzeichnet,
daß die Klammer-Stifte (41) in am Display-Gehäuse (23) ausgebildeten Führungs-Wölbungen (44) sich erstrecken.

6. Display nach einem der vorangehenden Ansprüche,
dadurch gekennzeichnet,
daß der lange Schenkel (34) der L-förmigen Klauen (31) als zweiarmiger Hebel über einen Biegesteg (35) mit dem Display-Gehäuse (23) verbunden ist.

7. Display nach einem der vorangehenden Ansprüche,
dadurch gekennzeichnet,
daß sein Gehäuse (23) ein Einbaugehäuse (23.1) aufweist, das ein Lampengehäuse (23.2) aufnimmt, an dessen Außenwänden eine Rippe (43) zur Aufnahme der Klammer-Stifte (41), Positionierzapfen (47) zur Aufnahme der Leiterplatte (48), Biegestege (35) zur seitlich verschwenkbaren Halterung von den Display-Halteklauen (31) und Federn (30) zum elastischen Andruck des Display (11) gegen die übergreifenden kurzen Schenkel (32) der Klauen (31) ausgebildet sind.

## Claims

1. An electro-optical display (11) comprising two screens (15, 17) arranged parallel to one another, one of which projects beyond the other laterally and carries feed electrodes (21) which are in contact through a segmented control rubber (50) with the connection path layer (49) of a printed circuit board (48) which is arranged behind the screens (15, 17) at a right angle to the latter, characterized in that a smaller front screen (15) is located in front of a larger rear screen (17) along the side edge (22) of which the feed electrodes (21) are fixed by U-shaped contact clips (37), the yoke (40) of which is in each case prolonged in a pin (41) at a right angle behind the display (11), with the control rubber (50) arranged between the circuit board (48) and the clip pins (41) near a side wall of the display housing (23), and where L-shaped and resilient swing-out catches (31) are fixed to the display housing (23) which engage laterally by means of their short arms (32) around the larger rear screen (17) near the smaller front screen (15) behind its viewing side plane (16).

2. A display according to claim 1, characterized in that a rib (43) comprising openings (42) for reaching the clip pins (41) is formed on the display housing (23).

3. A display according to either of the preceding claims, characterized in that positioning pegs (47) for receiving a control rubber support strip (46) and the circuit board (48) are formed on the display housing (23) behind the display (11) and extending parallel to the latter.

4. A display according to any one of the preceding claims, characterized in that curved support springs (30) for pressing the rear screen (17) against the short arm (32) of the display retaining catches (31) are provided at the side in the display housing (23) behind the rear screen (17).

5. A display according to any one of the preceding claims, characterized in that the clip pins (41) extend in guide curves (44) constructed in the display housing (23).

6. A display according to any one of the preceding claims, characterized in that the long arm (34) of the L-shaped catch (31) is connected to the display housing (23) as a two-armed lever by means of a pivot bar (35).

7. A display according to any one of the preceding claims, characterized in that its housing (23) comprises a built in housing (23.1) which receives a lamp housing (23.2), on the outer wall of which are formed a rib (43) for receiving the clip pins (41), positioning pegs (47) for receiving the circuit board (48), pivot bars (35) for laterally pivotable holding of display retaining catches (31) and springs (30) for resilient pressing of the display (11) against the overlapping short arms (32) of the catches (31).

## Revendications

1. Dispositif d'affichage électro-optique (11) comportant deux vitres (15, 17), qui sont disposées parallèlement l'une à l'autre et dont l'une fait saille latéralement de l'autre et porte des électrodes d'alimentation (21), qui sont en contact, par l'intermédiaire d'une pièce en caoutchouc conducteur segmentée (50), avec un plaquage (49) portant des pistes conductrices et faisant partie d'une plaque de circuit imprimé (48), qui est disposée derrière les vitres (15, 17) perpendiculairement à ces dernières,
caractérisé en ce que
une vitre frontale (15), de plus petites dimensions, est disposée devant une vitre arrière (17) de plus grandes dimensions, le long du bord latéral (22) de laquelle les électrodes d'alimentation (21) sont saisies par des agrafes de contact (37) en forme de U dont la pince (40) se prolonge, à chaque fois, perpendiculairement au dispositif d'affichage (11), vers l'arrière, par une broche (41), avec la disposition de la pièce en caoutchouc conducteur (50) entre la plaque de circuit imprimé (48) et les broches (41) des agrafes dans la zone d'une paroi latérale du boîtier (23) du dispositif d'affichage,
des griffes (31) en forme de L et montées à pivotement par élasticité de ressort, qui saisissent latéralement, au moyen de leurs branches courtes (32), la vitre arrière (17) de plus grandes dimensions à côté de la vitre avant de plus faibles dimensions derrière son plan disposé du côté visible, étant fixées sur le boîtier (23) du dispositif d'affichage.

2. Dispositif d'affichage selon la revendication 1,
caractérisé en ce que
sur le boîtier (23) du dispositif d'affichage est conformée une nervure (43) comportant des ouvertures (42) pour le passage des broches (41) des agrafes.

3. Dispositif d'affichage selon l'une quelconque des revendications précédentes,
caractérisé en ce que
sur le boîtier (23) du dispositif d'affichage, derrière le dispositif d'affichage (11), sont conformés des tenons de positionnement (47), qui s'étendent parallèlement à ce dernier et sont destinées à recevoir une bande support en caoutchouc conducteur (46) et la plaque de circuit imprimé (48).

4. Dispositif d'affichage selon l'une quelconque des revendications précédentes,
caractérisé en ce que
sur le boîtier (23) du dispositif d'affichage, latéralement, derrière la vitre arrière (17), on prévoit des ressorts d'appui recourbés (30) pour presser la vitre arrière (17) contre la branche courte (32) des griffes (31) de maintien du dispositif d'affichage.

5. Dispositif d'affichage selon l'une quelconque des revendications précédentes,
caractérisé en ce que
les broches (41) des agrafes s'étendent dans des bombements de guidage (44) conformés sur le boîtier (23) du dispositif d'affichage.

6. Dispositif d'affichage selon l'une quelconque des revendications précédentes,
caractérisé en ce que
la branche longue (34) des griffes (31) en forme de L est reliée, sous la forme d'un levier à deux bras, au boîtier (23) du dispositif d'affichage par l'intermédiaire d'une traverse de fiexion (35).

7. Dispositif d'affichage selon l'une quelconque des revendications précédentes,
caractérisé en ce que
son boîtier (23) comporte un boîtier encastré (23.1), qui reçoit un boîtier de lampe (23.2) sur les parois extérieures duquel sont conformés une nervure (43) destinée à recevoir la broche (41) des agrafes, des tenons de positionnement (47) destinés à recevoir la plaque de circuit imprimé (48), des traverses de flexion (35) destinées au maintien latéral à pivotement de griffes (31) de maintien du dispositif d'affichage et des ressorts (30) destinés à comprimer élastiquement le dispositif d'affichage (11) contre la branche courte (32) des griffes (31) qui saisit ce dernier.
